# EUROPÄISCHE PATENTSCHRIFT

(11) **EP 1 334 068 B1**
(45) Veröffentlichungstag und Bekanntmachung des Hinweises auf die Patenterteilung: **12.10.2005**
(21) Anmeldenummer: 01996514.4
(22) Anmeldetag: 14.11.2001
(51) Int. Cl.: C01B 39/02, C01B 39/14, C01B 39/20, C01B 39/46, B01J 13/00, C11D 3/12, B01D 71/02, C09C 1/00, C04B 35/622

(54) **SYNTHESE UND STABILISIERUNG VON NANOSKALIGEN ZEOLITHTEILCHEN**
SYNTHESIS AND STABILISATION OF NANOSCALE ZEOLITE PARTICLES
SYNTHESE ET STABILISATION DE PARTICULES DE ZEOLITHE A L'ECHELLE NANOMETRIQUE

(30) Priorität: 14.11.2000 DE 10056362
(43) Veröffentlichungstag der Anmeldung: 13.08.2003
(73) Patentinhaber: Nanoscape AG, 80807 München (DE)
(72) Erfinder: Valtchev, Valentin Panov, 68720 Illfurth (FR); Bein, Thomas, 82166 Gräfelfing (DE)
(74) Vertreter: Forstmeyer, Dietmar
(86) Internationale Anmeldenummer: PCT/EP2001/013190
(87) Internationale Veröffentlichungsnummer: WO 2002/040403

(56) Entgegenhaltungen:
- EP-A- 0 004 225
- EP-A- 0 037 018
- EP-A- 0 154 291
- DD-A- 249 692
- DD-A- 265 389
- FR-A- 2 287 504
- FR-A- 2 455 479
- PATENT ABSTRACTS OF JAPAN vol. 012, no. 209 (C-504), 15. Juni 1988 (1988-06-15) & JP 63 008211 A (LION CORP), 14. Januar 1988 (1988-01-14)

## Beschreibung

Die vorliegende Erfindung betrifft Zeolithe, deren durchschnittliche Dimensionen im Bereich von Nanometern liegen, und Verfahren zu ihrer Herstellung. Diese Zeolithe können insbesondere nach ihrer Reinigung stabile kolloidale Suspensionen mit einer sehr geringen Sedimentationsgeschwindigkeit bilden. Die Erfindung betrifft insbesondere Verfahren, bei denen nanoskalige Zeolithe unter speziellen Bedingungen aus alkalischen Aluminiumsilicatgelen hergestellt werden, die keine organischen Basen enthalten.

Aluminiumsilicatzeolithe sind eine wohlbekannte Klasse von Molekularsieben, die in vielen chemischen Verfahren Verwendung finden (D. Breck, "Zeolite Molecular Sieves", John Wiley and Sons, New York, 1974). Zum Beispiel wird Zeolith A (dessen Synthese zum Beispiel in der DE 1 095 795 (3.10.1958) beschrieben wird) seit langem als Ionenaustauscher in Vorrichtungen zum Weichmachen von Wasser und in Detergenzien verwendet. Im letzteren Fall dient der Zeolith dazu, einen Teil oder die Gesamtmenge an anorganischen Phosphatbuildern wie Natriumtripolyphosphat zu ersetzen (E.V.R. Borgstedt, H.S. Sherry, J.P. Slobogin, Studies in Surface Science and Catalysis, Bd. 105, 1659 - 1666, Elsevier 1997). Zum Beispiel wird in der EP 0 002 960 A1 (27.12.1978) gelehrt, dispergierte Kristalle von Zeolith A mit einer einheitlichen mittleren Teilchengröße zwischen 1 und 10 µm dadurch herzustellen, daß Natrium-Aluminium-Silicatgele mit einer speziellen Anzahl von gemahlenen Impfkristallen mit einer mittleren Teilchengröße von weniger als etwa 0,5 µm versetzt werden. Das Patent DE 30 02 278 A1 (23.01.1980) lehrt ein zweistufiges Verfahren zur Herstellung von Zeolith 4A (die Natriumform von Zeolith A) mit Teilchengrößen zwischen etwa 2 - 10 µm, insbesondere zur Verwendung bei Waschmitteldetergenzien. Ein anderer interessanter Zeolith für Waschanwendungen ist Zeolith P (zum Beispiel wird ein kontinuierliches Herstellungsverfahren in der WO 96/14270, 07.11.1994 beschrieben).

Zeolith Y ist von großem Interesse als Katalysatorträger, zum Beispiel bei katalytischer Fluidcrackung. Die US 4,576,807 (18.03.1986) lehrt die Herstellung von Zeolith Y durch Beimpfen von Natriumsilicat bei Raumtemperatur mit einer geringen Menge von Zeolith Y Impfkristallen, gefolgt von Zugabe von Natriumaluminat und Erhitzen.

Zeolithkristalle, die unter üblichen Synthesebedingungen hergestellt werden, weisen oft eine mittlere Teilchengröße zwischen 1 und 5 µm auf. Die Teilchengrößenverteilung ist im allgemeinen breit. Für einige Zwecke ist die Verwendung von kleinen Zeolithteilchen wünschenswert, und oft verbessert sich die Qualität der Zeolithkristalle, wenn die Kristallgröße verringert wird. Bei einigen Anwendungen wäre es auch nützlich, wenn die Zeolithteilchen klein genug zur Bildung einer kolloidalen Suspension wären. Neben Anwendungen in der chemischen Verfahrensindustrie können die kleinen Zeolithteilchen als Impfkristalle bei der Zeolithsynthese verwendet werden, um die Verfahrensbedingungen und Produkteigenschaften zu steuern. Daher sind für eine Anzahl von industriellen Anwendungen nanoskalige Zeolithteilchen mit einer im wesentlichen einheitlichen reproduzierbaren und steuerbaren Größe erforderlich. Zum Beispiel sind kleine Zeolithkristalle in Formulierungen von Waschmitteln nützlich, bei denen Weichmachen von Wasser durch schnellen Ionenaustausch von Calcium und Magnesium, eine größere Builder-Kapazität, eine schnellere Suspendierbarkeit, eine geringere mechanische Abnutzung der Ausrüstung und verringerte Rückstände auf dem Gewebe gewünschte Eigenschaften sind. Ferner werden stabile kolloidale Suspensionen, die Teilchen mit einer Sub-Micronteilchengröße erfordern, in flüssigen Waschmitteln gebraucht. Es wird auch angenommen, daß eine höhere Konzentration an gelöstem Silicat in Gegenwart von kleinen Kristalliten die Korrosionsverhinderung fördern kann (EP 0 315 282 Al, 04.11.1987). Detergensformulierungen können oft leichter hergestellt werden, wenn Aufschlämmungen in Sprühtürmen verwendet werden (in Abhängigkeit von der Entfernung zum Zeolithhersteller); dadurch wird die Verwendung von stabilen kolloidalen Suspensionen begünstigt. Wenn die Teilchengröße für die Bildung von stabilen Suspensionen zu groß ist, werden komplexe Stabilisierungssysteme einschließlich nichtionische grenzflächenaktive Mittel (wie Oxoalkohol), Natriumalkylbenzolsulfonat und Polymere benötigt, um ein Absetzen zu vermeiden (EP-A-357,989). Dadurch werden die Kosten gesteigert und die Freiheit bei der Formulierung des Detergens begrenzt.

Im Zusammenhang mit katalytischen Reaktionen führt eine geringe Kristallgröße zu einem verringerten Diffusionswiderstand (K. Beschmann, L. Riekert, J. Catal., 1993, 141, 548 - 565) und möglicherweise zu einer Verringerung der Deaktivierungsgeschwindigkeit des Zeolithen wegen der Ablagerung von Abrieb auf der Außenfläche der Kristalle (M. Yamamura, K. Chaki, T. Wakatsuki, H. Okado, K. Fujimoto, Zeolites, 1994, 14, 643 - 649).

Eine Anzahl von Verfahren zur Herstellung von kleinen und Sub-Micron-Zeolithkristallen werden bereits in der Literatur und in Patenten beschrieben.

Sub-Micronkristallite von Zeolith 4A und P1 mit einer Größe im wesentlichen zwischen 100 und 1000 nm werden zur Verwendung in Flüssigdetergenzien in der EP 0 315 282 A1 (04.11.1987) beansprucht. Im Fall von P1 wurde eine heiße Lösung von Natriumaluminat (bei. 90 °C) mit einer heißen Lösung Natriummetasilicatpentahydrat unter heftigem Rühren gemischt, 5 Stunden lang bei 90 °C gehalten und dann filtriert, zur Herstellung von kleinem Zeolith A wird auf Beispiel 2 in dem deutschen Patent DE 1 095 795 (3.10.1958) Bezug genommen, obwohl dieses Patent keine Teilchengröße angibt. Es wird beansprucht, daß 80 Gew.-% des Zeolith-A-Produkts kleiner als 800 nm sind. Zeolith P mit einer geringen Teilchengröße (etwa 50 Gew.-% sind kleiner als 800 nm), der durch Naßmahlen erhalten wurde, wird in der WO 96/34828 (01.05.1995) beansprucht. Es wird angegeben, daß Mahlen die Detergenseigenschaften des Zeoliths nicht beeinträchtigt.

Das Patent EP 1 002 764 A1 (02.11.1999) beschreibt ein Verfahren zur Herstellung von kleinen Zeotypkristallen (Zeolithe und verwandte Materialien), das die Herstellung eines Vorläufergels innerhalb eines porösen Materials mit Poren von weniger als etwa 100 nm aufweist, zum Beispiel Kohlenstoff oder MgO, oder Aluminosilicat. Die Synthese von ZSM-5 in Kohlenstoff und MgO sowie LTA und SOD in Aluminosilicat und SOD in MgAl₂O₄ wird beschrieben.

Die Verwendung einer kalten Silicatvorläuferlösung (-9 bis +10 °C) zur Herstellung von kleinen Kristallen von Zeolith Z-14 (einer Form von Zeolith X) wird in der FR 1,566,843 (16.04.1968) beschrieben. Zeolithteilchengrößen zwischen 20 und 100 nm werden beansprucht.

Mono- oder Disaccharide können verwendet werden, um die Kristallgröße von Faujasite (Zeolith X und Y) kleinzuhalten, wie in der US 4,372,931 (08.02.1983) beschrieben. Zu einem üblichen Aluminiumsilicatreaktionsgemisch, das durch Mischen von wäßrigen Alkalimetallsilicat- und Alkalimetallaluminatlösungen bei tiefen Temperaturen erhalten wurde, werden Succhrose, Dextrose oder andere Saccharide zugegeben, gefolgt von Altern und einer hydrothermalen Synthese. Kristallgrößen zwischen etwa 30 und 40 nm werden beansprucht, die Produkte werden aber nicht bezüglich ihrer kolloidalen Eigenschaften charakterisiert.

In vielen der vorstehenden Patente wird die Herstellung von kleinen Zeolithteilchen beansprucht. Die Eigenschaften der entstandenen Suspensionen werden jedoch nicht im Detail dargestellt. Dieser Punkt wird in zwei jüngeren Patenten für spezielle synthetische Systeme angesprochen.

In der WO 93/08125 (23.10.1991) werden Molekularsiebe beansprucht, die Kristalle oder Agglomerate mit einem durchschnittlichen Durchmesser von 100 nm oder weniger umfassen. Von diesen Materialien wird gesagt, daß sie stabile, kolloidale Suspensionen von Zeolithen einschließlich MFI, MEL und BEA bilden und daß sie durch Herstellung einer kochenden wäßrigen Synthesemischung aus der Silicat-Quelle und einem organischen strukturdirigierenden Mittel (in der Form eines Hydroxids) in einer (überschüssigen) Menge hergestellt werden, die ausreicht, um eine Auflösung des Siliciumdioxids zu bewirken. Die Kristallgröße wurde durch Wahl der Kristallisationstemperatur (geringere Größe bei niedrigerer Temperatur) gesteuert.

In der WO 94/05597 (02.09.1992) werden kolloidale Suspensionen aus diskreten Teilchen eines Zeoliths aus klaren Aluminosilicatlösungen hergestellt, die mit Tetraalkylammonium stabilisiert sind. Der größere Teil des Alkalis wird als Tetraalkylammoniumhydroxid (TMAOH) bereitgestellt. Das Aluminium wird als Tetraalkylammoniumaluminat bereitgestellt und zu einem mit Alkali stabilisierten Silicagel oder Silicat unter starkem Mischen gegeben, gefolgt von einer hydrothermalen Synthese bei bis zu 100 °C und Zentrifugation. Verschiedene Zeolithe wie Zeolith A, Faujasite, ZSM-2 und Hydroxysodalit werden dadurch erhalten, daß zusätzliche Metallhydroxidlösung zugegeben wird. Suspensionen mit einer recht engen Teilchengrößenverteilung mit einer Durchschnittsgröße von weniger als 250 nm und geringen Sedimentationsgeschwindigkeiten werden beschrieben. Der Ionenaustausch der Zeolithe in dem Sol mit einem Ionenaustauscherharz als auch Suspensionen der Teilchen in Ethanol werden ebenfalls beschrieben.

Es sei festgestellt, daß sowohl in der WO 93/08125 als auch in der WO 94/05597 teuere Alkylammoniumsalze in großem Umfang verwendet werden, die entweder als strukturdirigierende Mittel und/oder Stabilisatoren für.die Gerüstvorläuferspezies verwendet werden.

Wie vorstehend dargestellt, kann die Größe der Zeolithkristalle dadurch beinflußt werden, daß die Ausgangszusammensetzung und die Kristallisationsbedingungen gesteuert werden. Viele Zeolithmaterialien können in Form von kleinen Kristallen hergestellt werden, bei denen die Größe der Einzelkristalle im Bereich von Nanometern liegt. Bei typischen Zeolithsynthesen bilden die Kristalle jedoch Aggregate einer größeren Größe und einer breiten Teilchengrößenverteilung. Die aus derartigen Produkten hergestellten Suspensionen weisen nicht die Eigenschaften typischer kolloidaler Suspensionen auf, sondern neigen dazu, sich abzuscheiden. Die Herstellung von Zeolithteilchen mit einer nanoskaligen Größe und einer engen Teilchengrößenverteilung, die kolloidale Suspensionen bilden können, erfordert üblicherweise spezielle Bedingungen. Wie vorstehend beschrieben, sind zum Beispiel große Mengen von organischen strukturdirigierenden Mitteln, ein geringer Alkaligehalt, spezielle Silicat- und Aluminat-Quellen und klare homogene Ausgangslösungen verwendet worden (WO 94/05597, WO 93/08125).

Es ist eine Aufgabe der Erfindung, ein Verfahren zur Herstellung von nanoskaligen (< 1000 nm) Zeolithen bereitzustellen, die insbesondere nach Reinigung stabile kolloidale Suspensionen bilden.

Es ist eine weitere Aufgabe der Erfindung, ein Verfahren zur Herstellung von nanoskaligen Zeolithen ohne die Verwendung von (oft teuren und toxischen) organischen strukturdirigierenden Mitteln während der Synthese bereitzustellen.

Es ist eine weitere Aufgabe der Erfindung, nanoskalige Zeolithe herzustellen, die insbesondere nach einer Postsynthesebehandlung stabile kolloidale Suspensionen bilden.

Es ist eine weitere Aufgabe der Erfindung, ein Verfahren zur Stabilisierung von kleinen Zeolithteilchen in Form von kolloidalen Suspensionen bereitzustellen.

Es ist eine weitere Aufgabe der Erfindung, ein Verfahren zur Herstellung von redispergierbaren kleinen Zeolithkristallen bereitzustellen.

Diese Aufgaben werden durch ein Verfahren zur Herstellung von nanoskaligen Zeolith-Teilchen gelöst, wobei
a) eine insbesondere wäßrige Lösung einer Silicat- und/oder Germanat-Quelle und einer Base hergestellt wird,
b) eine insbesondere wäßrige Lösung einer Aluminat- und/oder Gallat-Quelle und einer Base hergestellt wird, und
c) die Lösungen a) und b) zusammengegeben, gegebenenfalls gemischt und umgesetzt werden; dadurch gekennzeichnet; daß
der pH-Wert der Lösung in Schritt a) mindestens 11, vorzugsweise mindestens 12, stärker bevorzugt mindestens 13 und am stärksten bevorzugt mindestens 14 beträgt, und daß der pH-Wert der Lösung in Schritt b) mindestens 11, vorzugsweise mindestens 12, stärker bevorzugt mindestens 13 und am stärksten bevorzugt mindestens 14 beträgt.

Ferner werden nanoskalige Zeolith-Teilchen bereitgestellt, die nach dem erfindungsgemäßen Verfahren hergestellt werden können, und insbesondere kolloidale Suspensionen der nanoskaligen Zeolith-Teilchen.

Durch die vorliegende Erfindung wird damit ein Verfahren zur Herstellung von nanoskaligen Zeolithkristallen bereitgestellt, die insbesondere nach Reinigung und Stabilisierung typische Eigenschaften von kolloidalen Dispersionen oder Suspensionen und insbesondere eine sehr geringe Sedimentationsgeschwindigkeit aufweisen. Das Syntheseverfahren unterscheidet sich von den in der Patentliteratur beschriebenen Verfahren (WO 94/05597, WO 93/08125) insbesondere dadurch, daß dort extensive Mengen von teueren Alkylammoniumbasen verwendet werden und daß erfindungsgemäß vorzugsweise die Verwendung von organischen strukturdirigierenden Mitteln vermieden wird. Durch das erfindungsgemäße Verfahren kann es außerdem vermieden werden, Impfkristalle einzusetzen.

Vorzugsweise beträgt dabei das molare Verhältnis von Base zu Silicat- und/oder Germanat-Quelle in Schritt a) mindestens 2:1, bevorzugt mindestens 7:1, stärker bevorzugt mindestens 10-20:1 und besonders bevorzugt 25-30:1, und das molare Verhältnis von Base zu Aluminat- und/oder Gallat-Quelle in Schritt b) mindestens 2:1, bevorzugt mindestens 7:1. Dabei bezieht sich das molare Verhältnis auf die Konzentration der OH- und Si-, Ge-, Al- und Ga-haltigen Ionen.

Vorzugsweise werden als Basen Alkali- und/oder Erdalkalibasen eingesetzt, wobei es bevorzugt wird, daß in den Schritten a) und b) gleiche Basen eingesetzt werden.

Die Silicat- und/oder Germanat-Teilchen, die in der Lösung in Schritt a) vorliegen, sollten vorzugsweise eine mittlere Teilchengröße von maximal 10 nm aufweisen, und
die Aluminat- und/oder Gallat-Teilchen, die in der Lösung in Schritt b) vorliegen, sollten vorzugsweise eine mittlere Teilchengröße von maximal 10 nm aufweisen.

Vorzugsweise liegen die Lösungen a) und b) als klare Lösungen vor. Eine Lösung ist insbesondere dann klar, wenn sie gelöste Silicat- und/oder Germanat-Teilchen (Lösung a)) bzw. Aluminat- und/oder Gallat-Teilchen (Lösung b)) mit einer mittleren Teilchengröße von maximal 10 nm aufweist. Insbesondere weist eine klare Lösung üblicherweise - bezogen auf die Trockenmasse - weniger als 5 Gew.-%, vorzugsweise weniger als 1 Gew.-%, besonders bevorzugt weniger als 0,1 Gew.-% Aggregate und Teilchen mit einer mittleren Teilchengröße von mehr als 10 nm auf. Eine derartige klare Lösung kann z.B. durch einen hohen Gehalt an Base (einen hohen pH-Wert) und gegebenenfalls durch heftiges Rühren zur Homogenisierung der Lösungen a) und b) und gegebenenfalls auch c) erreicht werden. Vorteilhaft ist ferner, wenn zur Einstellung einer klaren Lösung ausreichend lange d.h. z.B. mindestens 1- 5h gewartet wird, wobei vorzugsweise während der gesamten Dauer heftig gerührt wird.

Gegebenenfalls können die Lösungen a) und/oder b) auch auf bis zu 90 °C vorgeheizt werden; üblicherweise ist Vorheizen jedoch nicht erforderlich, ja teilweise sogar unerwünscht. Ebenso können die Lösungen a) und/oder b) auch gekühlt werden, da bei der Umsetzung in Schritt c) erhöhte Temperaturen auftreten können. In einigen Fällen kann auch Ultraschall eingesetzt werden, um die Einstellung von klaren Lösungen zu fördern.

Durch die vorliegende Erfindung werden insbesondere die Bedingungen für eine steuerbare Synthese von nanoskaligen Zeolithteilchen für Zeolithe identifiziert, die in weitem Umfang in der Industrie verwendet werden, wie LTA-, FAU-, MFI- und EDI-artige Zeolithe.

Eine spezielle Eigenschaft von nanoskaligen Teilchen ist deren große äußere Oberfläche. Im Gegensatz zu üblichen Zeolithen, bei denen die Oberfläche typischerweise im Bereich von einigen bis zu 20 m²/g liegt, weisen die hier beschriebenen nanoskaligen Zeolithe äußere Oberflächen von mehr als 50m²/g, vorzugsweise von mehr als 100 m²/g auf.

In einigen Fällen können die Teilchengrößen der Zeolithe immer noch zu groß für bestimmte gewünschte Anwendungen sein und/oder das Agglomerationsverhalten der entstandenen Zeolithkristalle muß weiter verbessert werden. Bei diesen Situationen stellt die Erfindung ein Verfahren zur Reinigung und/oder zur Stabilisierung von nanoskaligen Zeolithteilchen bereit. Die Reinigung kann z. B. dadurch erfolgen, daß ein Teil der Alkali- und/oder Erdalkaliionen entfernt wird. So können z. B. bis zu 30, vorzugsweise bis zu 70 und besonders bevorzugt mehr als 90 Gew.-% der Ionen entfernt werden. Dabei können die kleinen Ionen wie z.B. Na+ oder K+ durch größere Ionen wie NH₄⁺ ersetzt werden. Die Stabilisierung kann auch durch Zugabe geringer Mengen (typisch sind 0.05 bis 3 Gew.-% Dispergiermittel bezogen auf die Gesamtmenge des Zeoliths) von grenzflächenaktiven Kopplungsmitteln und/oder geeigneten grenzflächenaktiven Mitteln oder Polymeren entweder in die Syntheselösung c) oder in die gereinigte Suspension d) erfolgen. Die sowohl zur Steuerung der Teilchengröße als auch des Agglomerationsverhaltens in der Syntheselösung verwendeten Mittel umfassen Silankopplungsmittel wie Aminopropylmethoxysilan, Glycidyloxypropyltrimethoxysilan, Trimethylmethoxysilan, organische Ester von Phosphon- oder Phosphorsäuren wie Dimethylmethylphosphonat oder Dibutylphosphat. Diese Mittel können zu irgendeinem geeigneten Zeitpunkt während des Reaktionsverlaufes zugegeben werden.

Insbesondere nach Reinigung der nanoskaligen Zeolithe können Dispergiermittel zugegeben werden, um die kolloidalen Suspensionen zusätzlich oder alternativ gegen Agglomeration zu stabilisieren. Diese Dispergiermittel wirken entweder durch sterische Wechselwirkungen, wobei sich gewisse Gruppen wie Alkyl- oder Oligoethylenoxidketten in das Lösungsmittel erstrecken, oder durch abstoßende elektrostatische Kräfte oder durch eine Kombination davon. Diese Mittel umfassen monomere grenzflächenaktive Mittel wie Metalloleate, Natriumalkylbenzolsulfonat, Hexadecyltrimethylammoniumbromid oder Natrium-N-methyl-N-oleyllaurat. Polymere sind oft besonders wirksam und umfassen Homopolymere wie Poly(ethylenimin), Poly(ammoniumacrylat), Poly(aminosäuren) oder Poly(ethylenglykol) und Copolymere wie Acrylsäure-Methacrylsäurecopolymer oder Formaldehyd-Natriumalkylnaphthalinsulfonat. Es geht aus den vorstehenden Beispielen hervor, daß die Dispergiermittel nichtionische, kationische und anionische grenzflächenaktive Mittel in monomerer oder polymerer Form umfassen. Zusätzlich zu den vorstehend erwähnten Dispergiermitteln ist heute eine große Anzahl von geeigneten Dispergiermitteln erhältlich, und Fachleute können geeignete Mittel für spezielle Zwecke wie die Stabilisierung in Wasser, in organischen Lösungsmitteln wie Ethanol oder bei gewissen Teilchenkonzentrationen auswählen. Typische Mengen liegen im Bereich von 0,05 bis 3 Gew.-% Dispergiermittel der Gesamtmenge des Zeoliths in der Suspension. Repräsentative Beispiele werden in Z. Amjad, Dispersion of iron oxide particles in industrial waters. The influence of polymer structure, ionic charge and molecular weight. Tenside, Surfactants, Deterg. 36, 1999, 50 - 56; S. Wache, J. Plank, I. Moertlbauer, Wasser-lösliche Polymere als Dispergiermittel für keramische Suspensionen, DE 198 30 771, 09.07.1998; K. Yoshitake, T. Yokoyama, Process for producing hydrophobic organosilica sol, EP 881192, 26.05.1997; J. Clayton, Pigment/dispersant interactions in waterbased coatings, Pigm. Resin Technol. 27, 1998, 231 - 239; A. Dromard, C. Richard, Stable aqueous suspensions of precipitated silica (onium salt dispersants), EP 368722, 08.11.1988; J. Schmitz, H. Frommelius, U. Pegelow, H.-G.Schulte, R. Hofer, A new concept for dispersing agents in aqueous coatings, Prog. Org. Coat. 35, 1999, 191 - 196); P. Calvert, R. Lalanandham, M. Parish, E. Tormey, Dispersants in ceramic processing, Br. Ceram. Proc. 37, 1986, 249 - 53; und N. Tsubokawa, Modification of particle surfaces by grafting of functional polymers, Spec. Publ. - R. Soc. Chem. 235, 1999, 36 - 51 diskutiert.

Somit stellt die vorliegende Erfindung ein Verfahren zur Herstellung von Zeolithkristallen oder Aggregaten derartiger Kristalle nanoskaliger Größe mit einer relativ engen Teilchengrößenverteilung von z. B. ± 30%, bevorzugt ± 20% bereit, wobei von Lösungen ausgegangen wird, die Monomere und/oder Silicat- oder Germanatteilchen geringer Masse und Aluminat- oder Gallatteilchen enthalten, wobei vorzugsweise wie folgt vorgegangen wird:
- Verwendung von Silicat- und/oder Germanat-Quellen und Aluminat- und/oder Gallat-Quellen, die nach Auflösung vorzugsweise einen Teilchendurchmesser von ≤ 10, stärker bevorzugt ≤ 5 und besonders bevorzugt ≤ 3 nm aufweisen,
- Zugabe von Alkali- und/oder Erdalkalibasen in einer Menge, die zur vollständigen Lösung der Silicat- und/oder Germanat- und Aluminat- oder Gallat-Quellen ausreicht. Alkali-' und/oder Erdalkalibase und Silicat- und/oder Germanat-Quelle liegen im molaren Verhältnis von mindestens 2:1, bevorzugt mindestens 7:1 vor,
- heftiges Mischen der Vorläuferlösungen a) und b), um ein Synthesegemisch mit einer möglichst homogenen Verteilung der Komponenten in dem Ausgangssystem herzustellen. Die Teilchen weisen nach dem Mischen eine mittlere Teilchengröße von vorzugsweise ≤ 2 mm, besonders bevorzugt ≤ 0,5 mm auf. Meist liegt vor dem Mischen ein Gel vor, das durch das Mischen in dispergierte Teilchen, wie z. B. Flocken, mit einer mittleren Teilchengröße von vorzugsweise ≤ 2 mm, besonders bevorzugt ≤ 0,5 mm zerkleinert wird,
- Kristallisation des Synthesegemisches bei einer mäßigen Temperatur für jeden bestimmten Zeolithen, die zur gewünschten mittleren Teilchengröße führt. Derartige Temperaturen betragen vorzugsweise 10 bis 60 °C, besonders bevorzugt 20 bis 60 °C oder 30 bis 60 °C,
- gegebenenfalls Behandlung mit einem grenzflächenaktiven Mittel oder Stabilisierungsmittel.

Die kolloidalen Suspensionen weisen vorzugsweise einen Gehalt an Zeolith-Teilchen von mindestens 1 Gew.-%, bezogen auf das Gewicht des Lösungsmittels, auf. Als Suspensionsmittel werden vorzugsweise Wasser und/oder organische Lösungsmittel wie Ethanol eingesetzt. Derartige Suspensionen können einen oder mehrere Zeolithe und gegebenenfalls weitere in derartigen Suspensionen an sich übliche Zusatzstoffe aufweisen, die für die gewünschte Funktion notwendig sind, wie z.B. Dispergiermittel.

Erfindungsgemäß werden als Silikat-, Germanat-, Aluminat- und Gallat-Quellen Verbindungen bezeichnet, aus denen unter basischen Bedingungen Silikate, Aluminate und Gallate freigesetzt werden können.

Die in dieser Anmeldung erwähnten mittleren Teilchengrößen (=mittleren Teilchendurchmesser) können in an sich üblicher Weise durch dynamische Lichtstreuung bestimmt werden. Alkali- und Erdalkalisilikate wie Natriumsilikate und Silicasole, Aerosile und organische Siliciumkomplexe wie Siliciumalkoxide sind bevorzugte Silikat-Quellen und weiter jede Silikat-Quelle, die nach Auflösung einen mittleren Teilchendurchmesser von vorzugsweise ≤ 10 nm, stärker bevorzugt ≤ 5 nm und besonders bevorzugt ≤ 3 nm aufweist. Entsprechende Germanate etc. sind bevorzugte Germanat-Quellen. Die Aluminat- und/oder Gallat-Quellen und/oder die Silikat- und/oder Germanat-Quellen und insbesondere das Silicasol können unabhängig voneinander nach Auflösung z. B. eine mittlere Teilchengröße von bis zu 10 nm, bevorzugt bis zu 5 nm und besonders bevorzugt von bis zu 3 nm aufweisen.

Amorphe Aluminiumhydroxide mit einer geringen mittleren Teilchengröße, Alkalialuminate oder Aluminiumalkoxide sind bevorzugte Aluminat-Quellen. Entsprechende Gallate etc. sind bevorzugte Gallat-Quellen.

Die Alkalikationen werden in das Synthesegemisch vorzugsweise in Form eines Hydroxids eingeführt. Bevorzugte Alkalimetalle sind Natrium und Kalium, aber es ist auch die Verwendung von Li, Rb, Cs, NH₄ und auch die Verwendung von Erdalkalimetallen wie Ca, Ba, Sr etc. möglich.

Die Alkali- oder Erdalkalibasen sollten vorzugsweise in den Vorläuferlösungen in Mengen vorliegen, die die Bildung von Monomeren und Silicat- bzw. Germanatspezies mit einer geringen Masse (mittleren Teilchengröße nach Auflösung vorzugsweise ≤ 10 nm, stärker bevorzugt ≤ 5 nm und besonderes bevorzugt ≤ 3 nm) ermöglicht. Typischerweise wird dazu ein molares Verhältnis von (z.B. Alkali- und/oder Erdalkali-) Basen zum Silicat und/oder Germanat von 2:1 oder mehr erforderlich sein. Bevorzugte Verhältnisse sind: ≥ 7:1. Die Gesamtmenge des Alkalis in dem Zeolithvorstufensystem sollte vorzugsweise ausreichen, um die Bildung einer separaten Aluminat- und/oder Gallatlösung zu ermöglichen, in der Al(OH)⁻₄ bzw. Ga(OH)⁻₄ die dominante anionische Spezies ist.

Die Zeolithkristallisation hängt stark von der Natur bzw. dem Zustand der Silikat- bzw. Germanatspezies in der Vorstufe ab. Üblicherweise liegen viele verschiedene anionische Silikat- bzw. Germanatspezies in den alkalischen Vorstufenlösungen a) vor, die bei der Zeolithsynthese verwendet werden. Die Art der Polysilicat- bzw. Polygermanatanionen in einer alkalischen Lösung hängt von dem pH-Wert des Systems (z. B. pH 11-14), der Art des Alkali- und/oder Erdalkalimetalls (z. B. Na⁺, K⁺), der Gegenwart von Aluminium oder einigen Salzen in dem System (z. B. Na₂SO₄), der Temperatur (z. B. Raumtemperatur bis 250° C), der Herkunft der Silikat-Quelle und anderen Faktoren ab. Es ist schwierig, eine genaue Kontrolle der Silikat- bzw. Germanatanionen in den Zeolithvorläuferlösungen zu erreichen. Insbesondere bei einem hohen pH-Wert herrschen Monomere und Silikatspezies mit einer geringen Masse vor.

Im Gegensatz zu den alkalischen Silicat- bzw. Germanatlösungen ist die Chemie der alkalischen Aluminat- bzw. Gallatlösungen relativ einfach, wobei Al(OH)⁻₄ bzw. Ga(OH)⁻₄ als anionische Hauptspezies vorliegt (R.M. Barrer "Hydrothermal Chemistry of Zeolites", Academic Press, London, 1982).

Heftiges Mischen der Alkalisilicat- und/oder Germanat- und Aluminat- und/oder Gallatlösung, die wie vorstehend beschrieben hergestellt wurden, führt zu einem Zeolithvorstufengemisch, bei dem alle Komponenten homogen in Gelteilchen verteilt sind.

Vorzugsweise sind die Silikat- bzw. Germanat-Quellen und die Aluminat- bzw. Gallat-Quellen leicht in der Base löslich. Leicht löslich sind derartige Quellen z.B., wenn sie unter Rühren nach spätestens 30 min eine klare Lösung bilden. Derartige Lösungen weisen z.B. Teilchen mit den vorstehend erwähnten mittleren Teilchengrößen auf.

Es ist also gefunden worden, daß dadurch nanoskalige Zeolithteilchen mit einer engen Teilchengrößenverteilung erhalten werden können, daß Alkali- und/oder Erdalkalialuminosilicat- oder Germanatvorläufergele kristallisiert werden, welche durch heftiges Mischen von Silicat- oder Germanat- und Aluminat- oder Gallatlösungen hergestellt wurden, die Silikat- oder Germanatspezies geringer Masse und Aluminat- oder Gallatspezies enthalten. Die Zeolithteilchen können erfindungsgemäß eine mittlere Teilchengröße von ≤ 500 nm, bevorzugt ≤ 300 nm, stärker bevorzugt ≤ 200 nm, besonders bevorzugt ≤ 100 nm aufweisen.

Das Verfahren kann dazu verwendet werden, jeglichen Zeolith oder jegliches zeolithartige Material herzustellen, das aus Alkalialuminosilicaten - oder -germanaten oder verwandten Gelen kristallisiert werden kann. Das Zeolithinaterial kann hauptsächlich aus Aluminosilikat zusammengesetzt sein, oder es können Aluminium und/oder Silicium in verschiedenem Ausmaß durch Gallium, Germanium, Phosphor, Bor, Titan, Eisen, Chrom, Beryllium, Vanadium und andere Elemente ersetzt werden. Daher kann das Synthesegemisch andere Ausgangsmaterialen enthalten, die wie für die Synthese der gewünschten Molekularsiebe erforderlich, eingestellt wurden.

Die Größe der Zeolithteilchen kann dadurch eingestellt werden, daß die Zusammensetzung des Synthesegemisches (z. B. das Si/Al-Verhältnis) und auch die Herstellungsparameter (z. B. die Temperatur, die Intensität und Dauer des Rührens) variiert werden. Der Gehalt an SiO₂, GeO₂, Al₂O₃, Ga₂O₃, H₂O und auch das OH-/SiO₂- bzw. OH-/GeO₂-Verhältnis weisen eine starke Wirkung auf die finale mittlere Zeolithteilchengröße auf. Gemäß der vorliegenden Erfindung sollte der Alkali- und/oder Erdalkaligehalt in den Ausgangslösungen eingestellt werden (z. B. 2:1, 7:1, 10:1, besonders bevorzugt ≥ 12:1 wie etwa 15:1), um die Löslichkeit der Silicat- bzw. Germanat- und Aluminat- bzw. Gallät-Quellen zu steuern. Es können die anderen Komponenten jedoch in einem großen Umfang variiert werden, um die Art und die Größe der Zeolithteilchen zu steuern. Zum Beispiel kann die mittlere Teilchengröße dadurch variiert werden, daß die Menge an Aluminium oder Gallium und Wasser in dem System verändert wird. Üblicherweise führt eine Zunahme des Aluminium- bzw. Galliumgehalts zu einer Abnahme der Kristallgröße. Die Abnahme des Wassergehalts in dem System kann eine ähnliche Wirkung aufweisen.

Die erfindungsgemäßen Kristalle oder Aggregate weisen vorzugsweise Außenoberflächen von ≥ 50, bevorzugt ≥ 100 und stärker bevorzugt von ≥ 200 m²/g auf.

Heftiges Mischen (z. B. wie vorstehend erwähnt) des Ausgangssystems ist ebenfalls ein bedeutender Faktor bei der Herstellung der nanoskaligen Zeolithteilchen. Wenn alkalische Aluminat- bzw. Gallat- und Silicat- bzw. Germanatlösungen gemischt werden, wird üblicherweise schnell ein Gel gebildet. Das Mischen der beiden Vorläuferlösungen ist zum Erhalt eines homogenen Ausgangssystems sehr wichtig, das Nanokristalle einer konsistenten Größe liefern kann. Es sollten vorzugsweise kräftige Rührmittel (z. B. mit einer Rührgeschwindigkeit von ≥ 500 UpM) eingesetzt werden, um Inhomogenitäten in dem System zu vermeiden. Die Einführungsgeschwindigkeit der Aluminat- bzw. Gallat- und Silicat bzw. Germanatlösungen in die Rühreinheit ist ebenfalls von Bedeutung (z. B. schneller als 0,01 l/s, bevorzugt schneller als 0,1 l/s oder schneller als 1 l/s).

Die Kristallisationstemperatur weist eine ausgeprägte Wirkung auf die finale Kristallgröße auf. Als Regel kann festgestellt werden, daß geringere Temperaturen zu geringeren mittleren Teilchengrößen führen (z. B. bei Raumtemperatur bis 60°C wird ein Zeolith mit einem Teilchendurchmesser von 100 - 400 nm erhalten). Ein Unterscheidungsmerkmal des in der vorliegenden Erfindung beschriebenen Systems ist die hohe Reaktivität, die eine Kristallisation bei überraschend geringen Temperaturen bei relativ kurzen Kristallisationszeiten ermöglicht.

Somit kann die finale Größe eines speziellen Zeoliths dadurch recht genau gesteuert werden, daß eine geeignete Kombination der die mittlere Zeolithteilchengröße steuernden Faktoren ausgewählt wird.

Beispiele von Molekularsieben, die gemäß dem Verfahren der vorliegenden Erfindung in Form von stabilen kolloidalen Suspensionen hergestellt werden können, umfassen LTA-, FAU- und EDI-artige Zeolithe, sind aber nicht darauf beschränkt.

Erfindungsgemäß werden ferner Suspensionen von nanoskaligen Zeolithteilchen bereitgestellt. Die erfindungsgemäßen Zeolithe werden dazu z.B. unter heftigem Rühren in einem geeigneten Medium wie z.B. Wasser suspendiert. Die Suspensionen weisen mehr als 80 Gew.-%, bevorzugt mehr als 90 Gew.-%, stärker bevorzugt mehr als 95 Gew.-%, und besonders bevorzugt mehr als 99 Gew.-% Zeolithe mit einer Teilchengröße von weniger als 1000 nm, bevorzugt weniger als 500 nm, stärker bevorzugt weniger als 100 nm, noch stärker bevorzugt weniger als 50 nm auf. Die Suspensionen weisen üblicherweise nach einer Ruhezeit von 1 h keinen Bodensatz auf.

### Beispiele

### Beispiel 1

Dieses Verfahren erläutert die Herstellung von nanoskaligen LTA-Kristallen mit einer mittleren Teilchengröße von 210 nm und mit einer engen Teilchengrößenverteilung.

Die in diesem Experiment verwendeten Reaktanden werden nachstehend angegeben. Die Masse eines jeden Reaktanden wird in Gramm angegeben und die Produktnummer eines jeden Reaktanden wird in Klammern nach dem Hersteller-/Lieferantennamen angegeben.

| | |
|---|---|
| Natriumhydroxidpellets (97 %) | 47,7 (Aldrich, 22, 146-5) |
| Natriumaluminat | 10,58 (Riedel-deHaen, 13404) |
| (53 % Al₂O₃, 44,5 % Na₂O) Natriumsilicatlösung | 22,22 (Riedel-deHaen, 13729) |
| (27 % SiO₂, 10 % NaOH) Destilliertes Wasser | 200,0 |

Zwei Lösungen, ein Natriumaluminat (A) und ein Natriumsilicat (B) wurden dadurch hergestellt, daß Aluminat- und Silicat-Quellen jeweils mit Wasser gemischt und eine geeignete Menge Natriumhydroxid zugegeben wurde. Die Masse der Reaktanden in Gramm für jede Lösung betrug:
(A) 10,58 NaAlO₂ + 74 H₂O + 19 NaOH
(B) 22,22 Na₂Si₃O₇ + 126 H₂O + 28,7 NaOH

Die beiden Lösungen wurden in geschlossenen Gefäßen gerührt, bis alle Komponenten vollständig gelöst waren. Die Lösung der Komponenten wurde durch die Klarheit der Lösung angezeigt. Danach wurde Lösung (A) zur Lösung (B) unter heftigem Rühren (V = 700 Upm) gegeben und 45 Minuten homogenisiert, solange die Lösungen wegen der exothermen Reaktion der Lösung von Natriumhydroxid noch warm (40 - 50 °C) waren. Das resultierende Gemisch ist milchweiß mit einer geringen Viskosität.

Die molare Zusammensetzung des Synthesegemisches betrug:
7 Na₂O : 0,55 Al₂O₃ : 1,0 SiO₂ : 120 H₂O

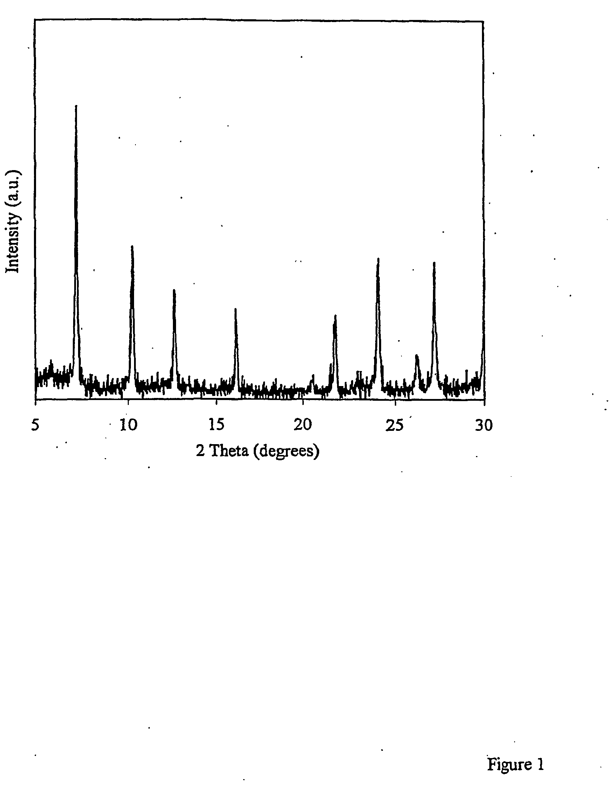

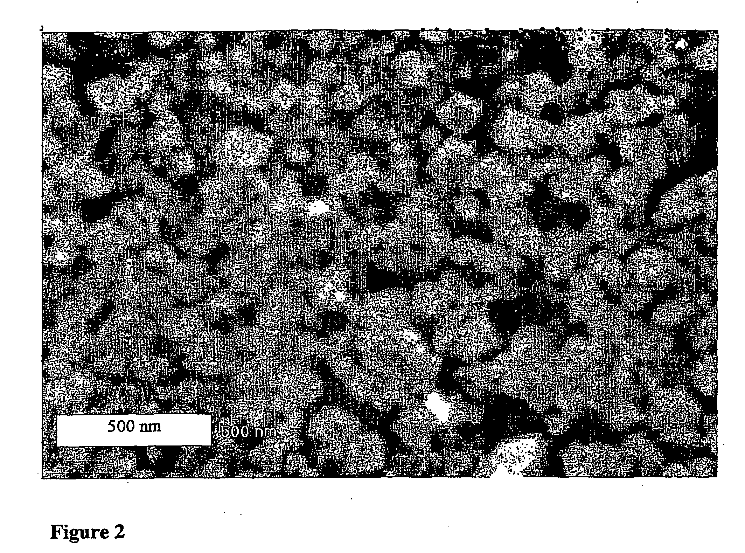

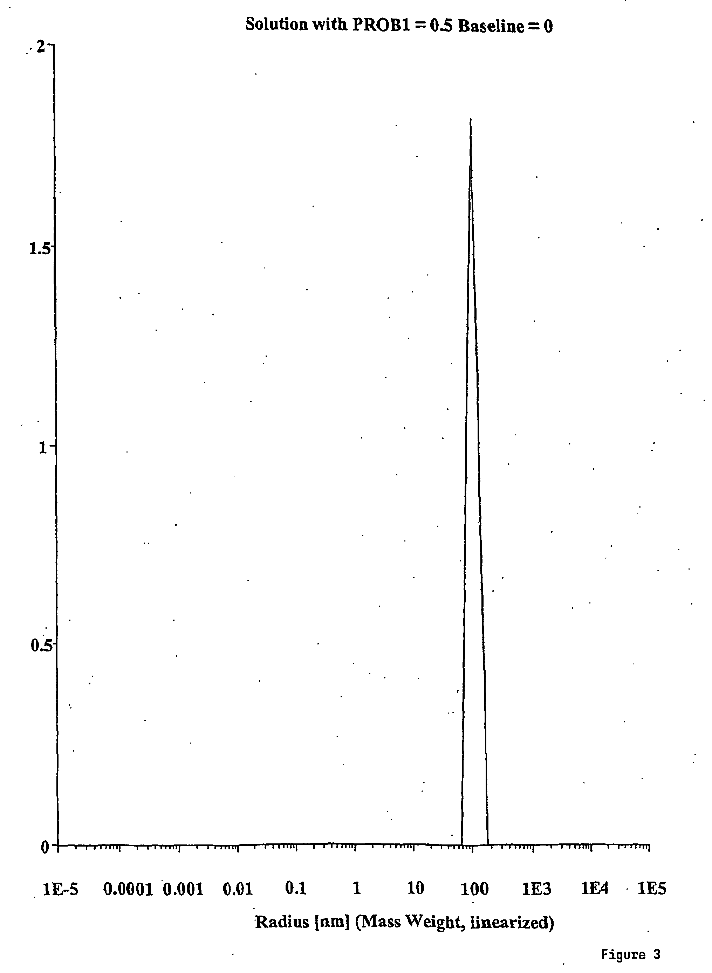

Die Synthese wurde in einer Polypropylenflasche 20 Stunden lang bei 37 °C durchgeführt. Das feste Produkt wurde von der Mutterlauge durch Zentrifugation (V = 15000 Upm während 30 Minuten) abgetrennt, in destilliertem Wasser unter Verwendung eines Ultraschallbades redispergiert und danach bei denselben Bedingungen zentrifugiert. Das Waschen wurde wiederholt, bis der pH-Wert des Waschwassers weniger als 9 betrug. Nach dem letzten Waschschritt wurden die LTA-Kristalle wiederum in destilliertem Wasser redispergiert und der pH-Wert auf einen Wert zwischen 9 und 10 durch Zugabe von verdünntem NH₄OH eingestellt. Die Kristalle wiesen keine Neigung zur Sedimentation auf. Ein Röntgenbeugungsdiagramm-Muster, eine Elektronenmicrographie und die Teilchengrößenverteilung des Produkts werden in Figuren 1, 2 bzw. 3 dargestellt. Die äußere Oberfläche des Produktes wurde mit der BET-Methöde zu 125 m² bestimmt.

### Beispiel 2

Dieses Beispiel erläutert den Einfluß der Synthesetemperatur auf die Größe der kolloidalen LTA-Kristalle.

Die in diesem Experiment verwendeten Reaktanden, ihre Hersteller-/Lieferantennummer und die Masse eines jeden Reaktanden in Gramm werden nachstehend angegeben:

| | |
|---|---|
| Natriumhydroxidpellets (97 %) | 180,0 (Aldrich, 22, 146-5) |
| Aluminiumhydroxid (79,7 % Al(OH)₃) | 29,36 (Reheis, 4135) |
| kolloidales Siliciumdioxid (30 % in Wasser) | 60,0 (Aldrich, 42,082-4) |
| Destilliertes Wasser | 492,0 |

Zwei Lösungen, eine Natriumaluminat-(A)- und eine Natriumsilicat-(B)-Lösung wurden dadurch hergestellt, daß die vorstehenden Reaktanden in den folgenden Verhältnissen (in Gramm) gemischt wurden:
(A) 29,36 Al(OH)₃ + 182 H₂O + 72 NaOH
(B) 60 SiO₂ (30 %) + 310 H₂O + 108 NaOH

Die beiden Lösungen wurden in geschlossenen Gefäßen bis zur vollständigen Lösung aller Komponenten gerührt, was durch die Klarheit der Lösungen angezeigt wurde. Die Lösungen wurden auf Raumtemperatur gekühlt und unter heftigem Rühren (V = 800 Upm) gemischt. Das Gemisch wurde 60 Minuten lang homogenisiert. Die molare Zusammensetzung des Reaktionsgemisches betrug:
7,5 Na₂O : 0,50 Al₂O₃ : 1,0 SiO₂ : 100 H₂O

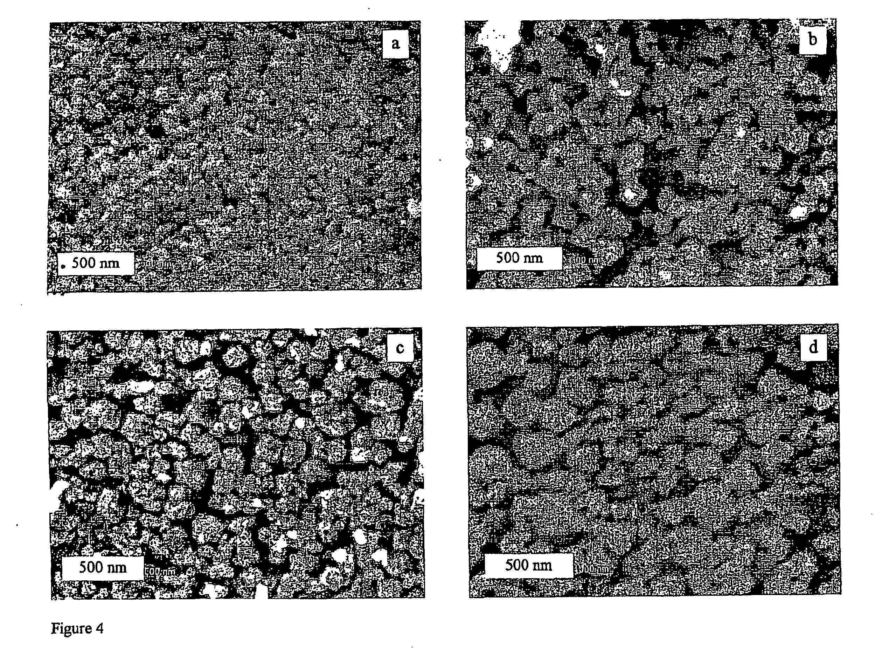

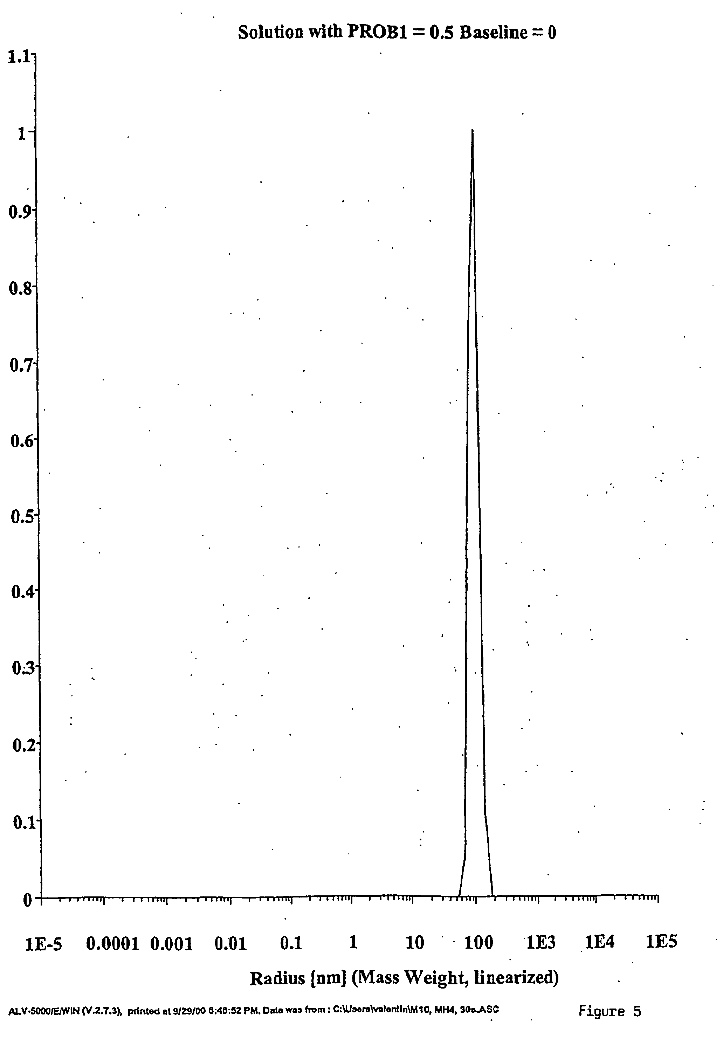

Das Synthesegemisch wurde in vier gleiche Portionen unterteilt, die bei 60 °C 2 Stunden lang, bei 40 °C 8 Stunden lang, bei 33 °C 24 Stunden lang und bei 18 - 22 °C 7 Tage lang kristallisiert wurden. Die Synthesen wurden in Plastikflaschen durchgeführt. Die Produkte wurden gereinigt und wie vorstehend beschrieben stabilisiert. Kleine Teile der Zeolithsuspensionen wurden bis zur Trockene verdampft und durch Röntgenbeugungsdiagramm analysiert. Alle Diffraktogramme wiesen das für Zeolith A typische Beugungsmuster auf. Die SEM-Proben wurden durch Verdampfen von einigen Microlitern der stark verdünnten LTA-Suspensionen auf einem SEM-Probenträger hergestellt. Der Unterschied der Größe der LTA-Kristalle, die bei verschiedenen Temperaturen erhalten wurden, kann in Figur 4 beobachtet werden. Die DLS-(Dynamische Lichtstreuung)-Daten der bei 33 °C hergestellten Probe werden in Figur 5 gezeigt. Die äußere Oberfläche der bei 33° erzeugten Probe war 130 m²/g.

### Beispiel 3

Dieses Beispiel erläutert die Herstellung von nanoskaligen FAU-Kristallen mit einer mittleren Teilchengröße von etwa 300 nm.

Eine Syntheselösung mit einer molaren Zusammensetzung von:
5 Na₂O : 0,2 Al₂O₃ : 1,0 SiO₂ : 200 H₂O
wurde dadurch hergestellt, daß die nachstehend angegebenen Reaktanden gemischt wurden. Die Masse eines jeden Reaktanden wird in Gramm angegeben und die Produktnummer eines jeden Reaktanden in Klammern nach dem Hersteller-/Lieferantennamen angegeben.

| | |
|---|---|
| Natriumhydroxidpellets (97 %) | 40 (Aldrich, 22, 146-5) |
| Aluminiumhydroxid (79,7 % Al(OH)₃) | 3,91 (Reheis, 4135) |
| kolloidales Siliciumdioxid (30 % in Wasser) | 20 (Aldrich, 42,082-4) |
| Destilliertes Wasser | 346 |

Die Masse eines jeden Reaktanden in Gramm für beide Ausgangslösungen wird nachstehend angegeben:
(A) 3,91 Al(OH)₃ + 20 H₂O + 10 NaOH
(B) 20 SiO₂ (30 %) + 120 H₂O + 30 NaOH

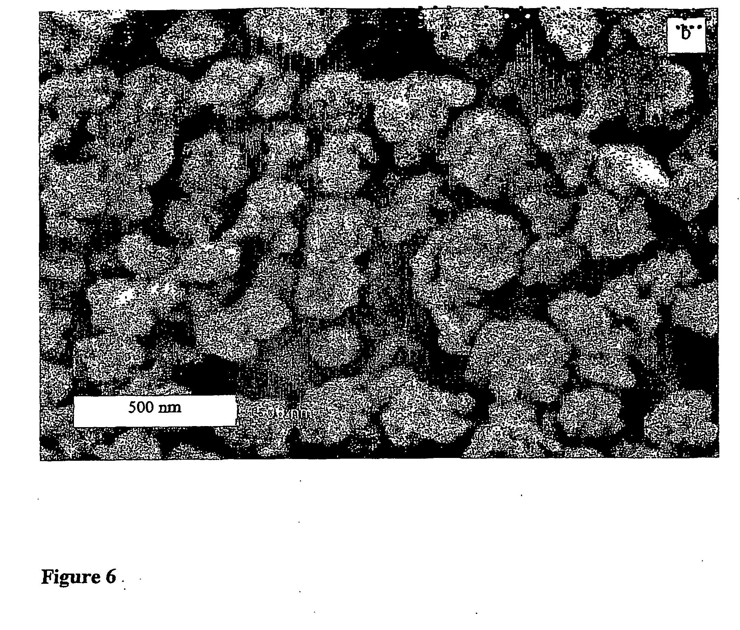

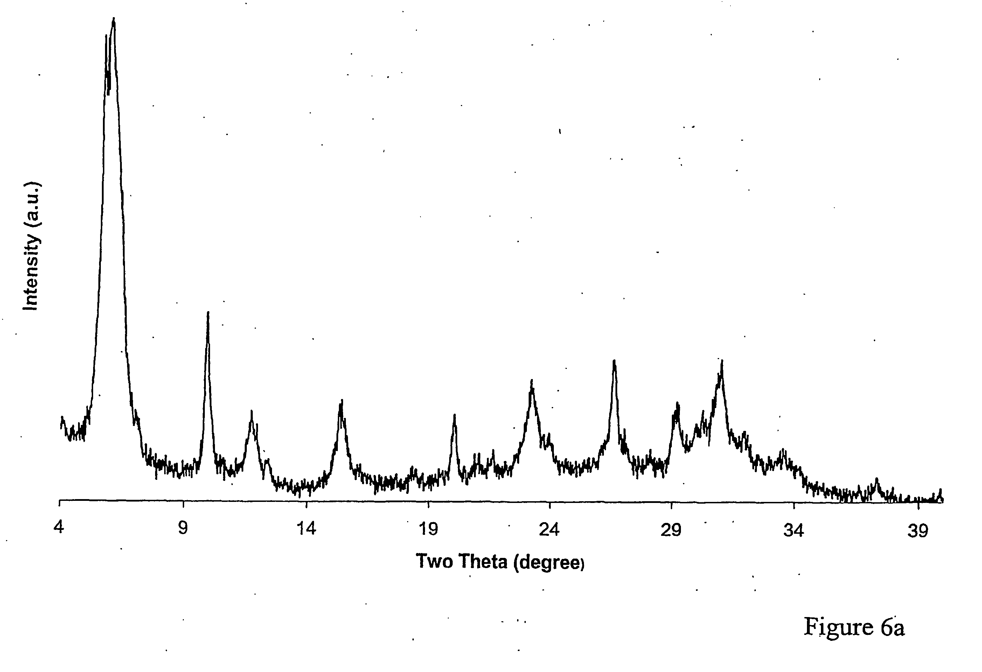

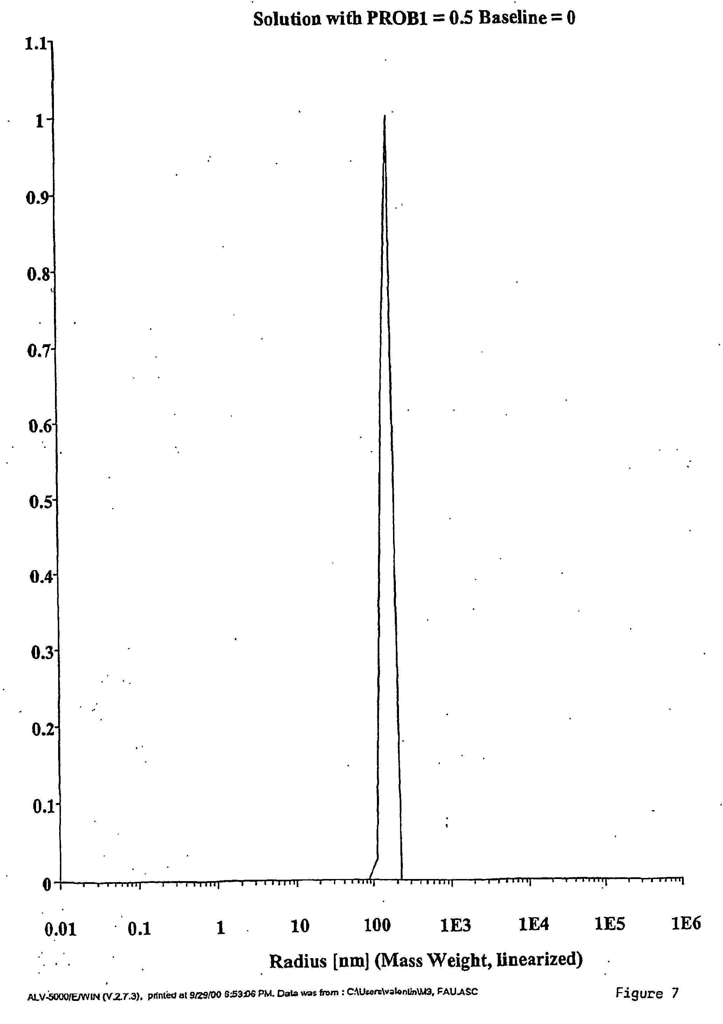

Die Ausgangsgemische wurden in geschlossenen Gefäßen gerührt, bis klare Lösungen erhalten wurden. Lösungen (A) und (B) wurden mit 80 bzw. 126 Gramm destilliertem Wasser verdünnt. Die klaren Lösungen wurden unter heftigem Rühren (V = 600 Upm) gemischt und 50 Minuten lang homogenisiert. Vor der Synthese wurde das Gel in eine Polypropylenflasche überführt und 24 Stunden lang bei Raumtemperatur gealtert. Die Kristallisation wurde in derselben Plastikflasche 17 Stunden bei 80 °C durchgeführt. Der Feststoff wurde von der Mutterlauge abgetrennt und wie vorstehend beschrieben gereinigt. Das Röntgenbeugungsmuster der Probe und eine Elektronenmicrographie werden in den Figuren 6a und b gezeigt. Die Teilchengrößen und die Teilchengrößenverteilung werden in Figur 7 gezeigt.

### Beispiel 4

Dieses Beispiel erläutert die Herstellung von nanoskaligen FAU-Kristallen mit einer mittleren Teilchengröße von etwa 230 nm.

Eine Syntheselösung mit einer molaren Zusammensetzung von:
3,8 Na₂O : 0,2 Al₂O₃ : 1,0 SiO₂ : 150 H₂O
wurde durch Mischen der nachstehend angegebenen Reaktanden hergestellt. Die Masse eines jeden Reaktanden wird in Gramm angegeben und die Produktnummer eines jeden Reaktanden wird in Klammern nach dem Hersteller-/Lieferantennamen angegeben.

| | |
|---|---|
| Natriumhydroxidpellets (97 %) | 30,4 (Aldrich, 22, 146-5) |
| Aluminiumhydroxid (79,7 % Al(OH)₃) | 3,91 (Reheis, 4135) |
| kolloidales Siliciumdioxid (30 % in Wasser) | 20,0 (Aldrich, 42,082-4) |
| Destilliertes Wasser | 256,0 |

Die Masse eines jeden Reaktanden in Gramm für die Ausgangslösungen war wie folgt:
(A) 3,91 Al(OH)₃ + 20 H₂O + 9 NaOH
(B) 20,0 SiO₂ (30 %) + 80 H₂O + 21,4 NaOH

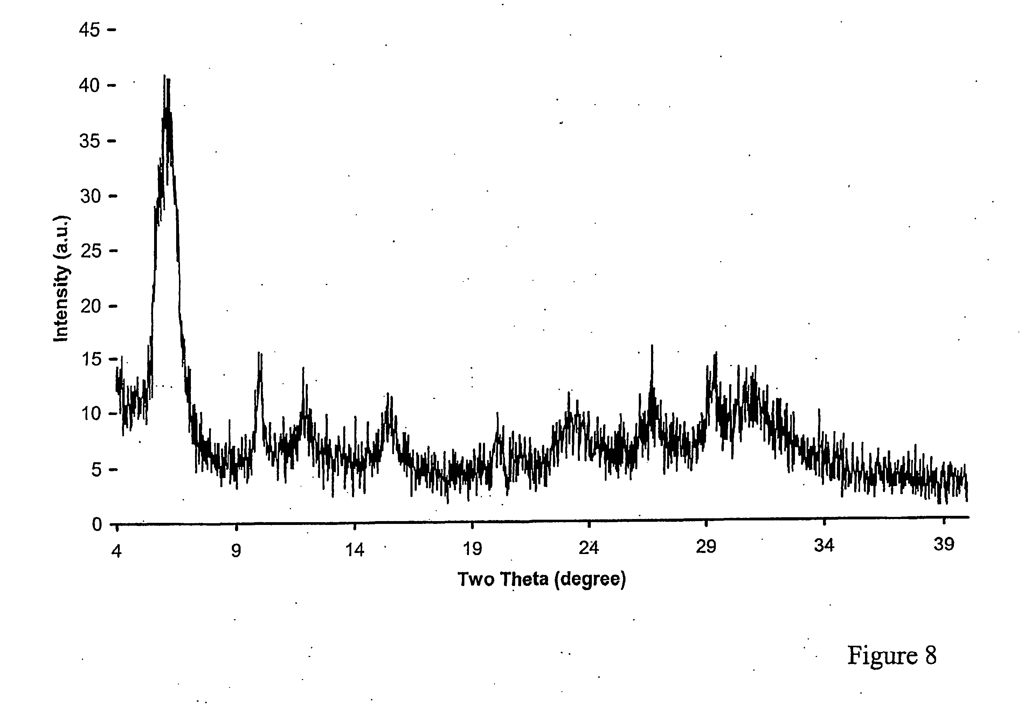

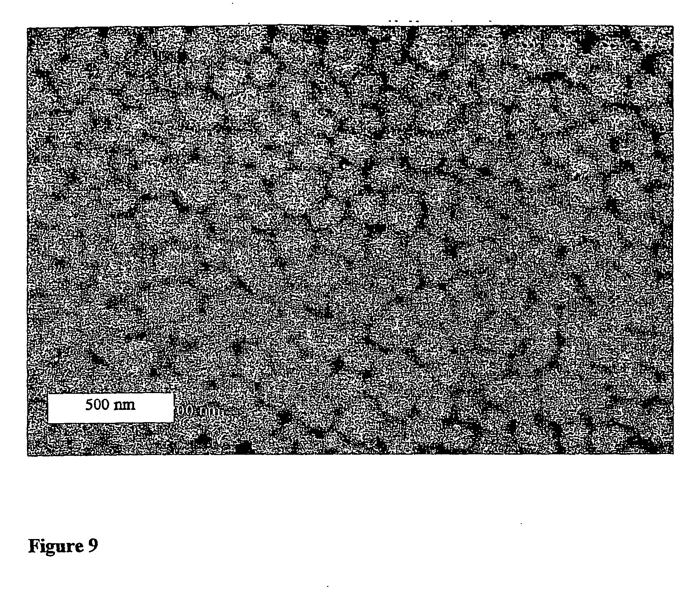

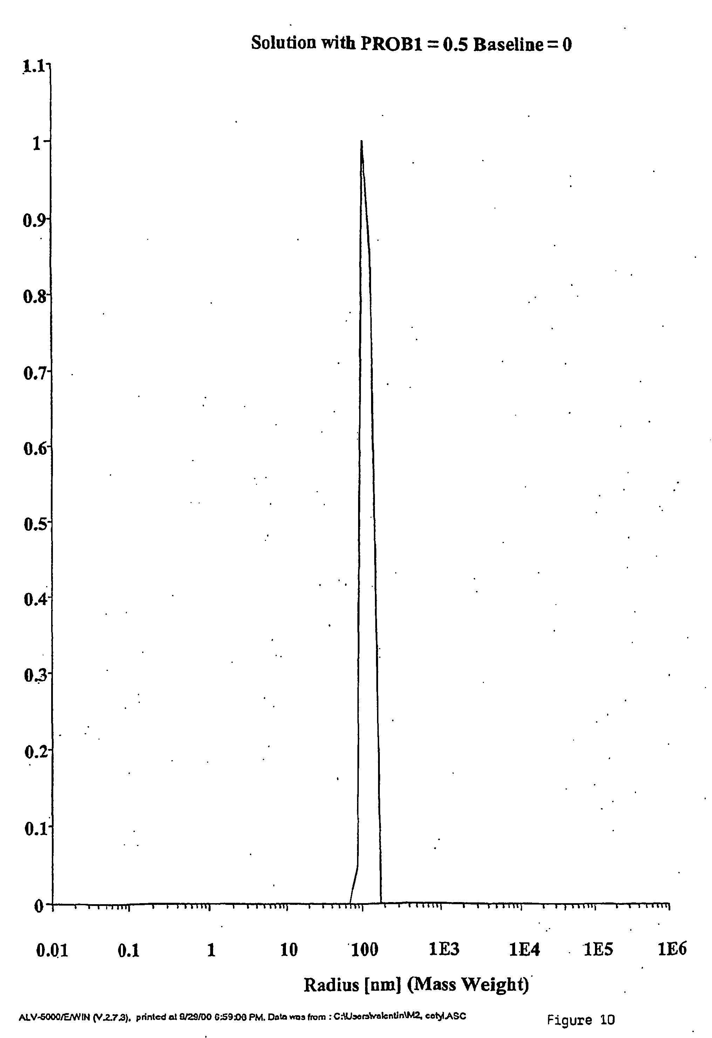

Die Ausgangsmischungen wurden in geschlossenen Gefäßen gerührt, bis klare Lösungen erhalten wurden. Lösungen (A) und (B) wurden mit 60 bzw. 96 g destilliertem Wasser verdünnt. Die klaren Lösungen wurden unter heftigem Rühren (V = 600 Upm) gemischt und 70 Minuten lang homogenisiert. Das Gel ließ man 20 Stunden bei Raumtemperatur altern und erhitzte es danach 24 Stunden lang auf 60 °C. Das Röntgenbeugungsmuster des gereinigten Feststoffes ist typisch für FAU-artige Materialien. Röntgenbeugungsmuster, Elektronenmicrographie und DLS-Teilchengrößenverteilung für die Probe werden in Figuren 8, 9 bzw. 10 gezeigt.

### Beispiel 5

Dieses Beispiel erläutert die Herstellung von nanoskaligen EDI-artigen Kristallen mit einer mittleren Teilchengröße von etwa 400 nm.

Die in diesem Experiment verwendeten Reaktanden werden nachstehend angegeben. Die Masse eines jeden Reaktanden wird in Gramm angegeben und die Produktnummer eines jeden Reaktanden wird in Klammern nach dem Hersteller-/Lieferantennamen angegeben.

| | |
|---|---|
| Natriumhydroxidpellets (97 %) | 60,0 (Aldrich, 22, 146-5) |
| Kaliumhydroxidpellets (85 %) | 126,0 (Aldrich, 30, 656-8) |
| Aluminiumhydroxid (79,7 % Al(OH)₃) | 24,47 (Reheis, 4135) |
| kolloidales Siliciumdioxid (30 % in Wasser) | 50,0 (Aldrich, 42,082-4) |
| Destilliertes Wasser | 396,0 |

Die Ausgangslösungen wurden dadurch hergestellt, daß die folgenden Reaktanden (in Gramm) gemischt wurden:
(A) 24,47 Al(OH)₃ + 150 H₂O + 30 NaOH + 50 KOH
(B) 50 SiO₂ (30 %) + 246 H₂O + 30 NaOH + 76 KOH

Die beiden Lösungen wurden in geschlossenen Gefäßen bis zur vollständigen Lösung aller Komponenten gerührt, was durch die Klarheit der Lösungen angezeigt wurde. Die Lösungen wurden auf Raumtemperatur abgekühlt und unter heftigem Rühren (V = 800 Upm) gemischt. Das Gemisch wurde 120 Minuten lang homogenisiert. Die molare Zusammensetzung des Synthesegemisches betrug:
3,8 K₂O : 3,0 Na₂O : 0,50 Al₂O₃ : 1,0 SiO₂ : 100 H₂O

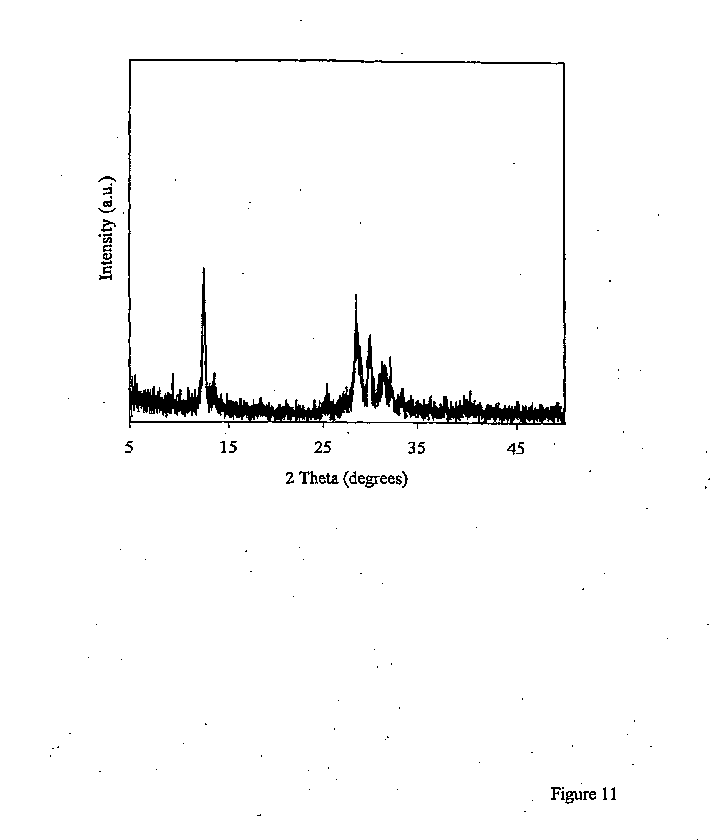

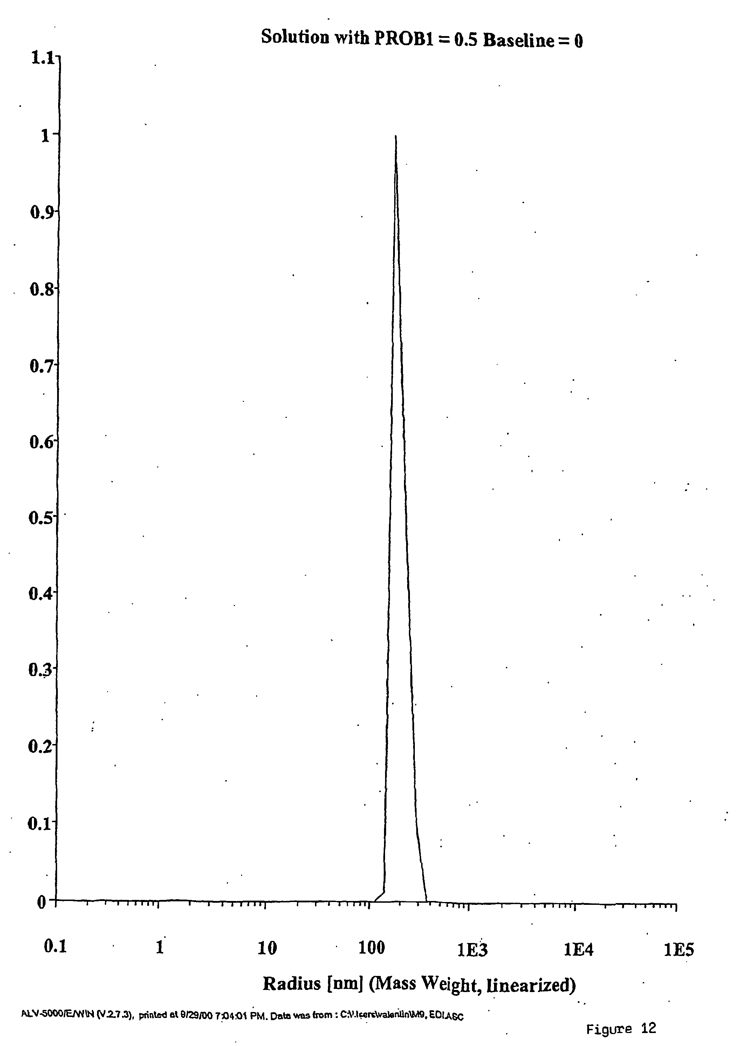

Die resultierende milchweiße Suspension wurde in eine Plastikflasche überführt und 30 Stunden auf 60 °C erhitzt. Der Feststoff wurde von der Mutterlauge abgetrennt und wie vorstehend beschrieben behandelt. Das trockene Produkt wurde als ein EDIartiger Zeolith (K-F) mit Röntgenbeugungsmustern (Figur 11) identifiziert. Die Teilchengrößenverteilung wird in Figur 12 angezeigt.

### Beispiel 6

Um die kolloidale Stabilität der Zeolithsuspensionen noch weiter zu verbessern, wurde nach der Synthese eine hydrothermale Behandlung durchgeführt. Die in Beispiel 1 hergestellte gereinigte Zeolith-A-Suspension (2,2 Gew.-% Zeolith) wurde mit 0,5 M NH₃-Lösung behandelt. 50,0 g der Zeolithsuspension wurden mit 50,0 g NH₃-Lösung gemischt und 20 Stunden lang auf 60°C erhitzt. Nach der hydrothermalen Behandlung wurde der Feststoff von der Flüssigkeit durch Zentrifugation entfernt (V = 15.000 UpM, 30 min) in destilliertem Wasser unter Verwendung eines Ultraschallbades redispergiert und danach bei denselben Bedingungen zentrifugiert. Das Waschen wurde wiederholt, bis der pH-Wert des Waschwassers unter 9 lag. Nach dem letzten Waschschritt wurden die LTA-Kristalle wiederum in destilliertem Wasser redispergiert und der pH-Wert durch Zugabe einer 0,1 M NH₃-Lösung auf einen Wert zwischen 9 und 10 eingestellt. Auch nachdem sie mehrere Wochen bei Raumtemperatur gestanden hatten, wiesen die nanoskaligen Zeolithteilchen keine Tendenz zur Abscheidung auf. Ein Teil der Suspension wurde bis zur Trocknung eingedampft. Das Röntgenbeugungsmuster des Feststoffs ist typisch für LTA-artige Materialien. Die Intensität der Peaks war der der Ausgangsmaterialien ähnlich.

### Beispiel 7

Eine weitere Verbesserung der kolloidalen Stabilität der nanoskaligen Zeolithkristalle kann durch Anwendung von grenzflächenaktiven Mitteln erreicht werden. Ein Teil der Suspension, die nach der Synthese einer hydrothermalen Behandlung (Beispiel 6) unterzogen worden war, wurde in diesem Experiment verwendet. 10,0 g Suspension, die 0,75 Gew.-% Zeolith A enthielt, wurden mit 1,0 g einer 0,025 M Lösung von Brij 76 (C₁₈H₃₇(OCH₂CH₂)₁₀OH), die von Aldrich geliefert wurde, gemischt. Nach kurzem Mischen wurde die Lösung in eine Plastikflasche überführt. Nachdem sie einen Monat bei Raumtemperatur gestanden hatte, wies die Suspension keine Neigung zum Abscheiden auf.

## Patentansprüche

1. Verfahren zur Herstellung von Zeolith-Teilchen mit einer durchschnittlichen Teilchengröße von weniger als 1000 nm, wobei
a) eine Lösung einer Silikat- und/oder Germanat-Quelle und einer Base hergestellt wird,
b) eine Lösung einer Aluminat- und/oder Gallat-Quelle und einer Base hergestellt wird, und
c) die Lösungen a) und b) zusammengegeben und umgesetzt werden,
**dadurch gekennzeichnet, daß**
die Silikat-und/oder Germanat Quelle in Schritt a) und die Aluminat- und/oder Gallat-Quelle in Schritt b) leicht in den Basen löslich sind,
und daß
der pH-Wert der Lösung in Schritt a) mindestens 11 beträgt, und daß
der pH-Wert der Lösung in Schritt b) mindestens 11 beträgt.

2. Verfahren nach Anspruch 1, **dadurch gekennzeichnet, daß** keine Alkylammoniumionen oder andere organische strukturdirigierende Mittel eingesetzt werden.

3. Verfahren nach einem der vorstehenden Ansprüche, **dadurch gekennzeichnet, daß**
in Schritt a) das molare Verhältnis von Base zu Silikat-und/oder Germanat-Quelle mindestens 2:1 beträgt, und daß
in Schritt b) das molare Verhältnis von Base zu Aluminat- und/oder Gallat-Quelle mindestens 2:1 beträgt.

4. Verfahren nach einem der vorstehenden Ansprüche, **dadurch gekennzeichnet, daß**
die Silicat- und/oder Germanat-Teilchen in den Lösungen in Schritt a) eine mittlere Teilchengröße von maximal 10 nm aufweisen, und daß
die Aluminat- und/oder Gallat-Teilchen in den Lösungen in Schritt b) eine mittlere Teilchengröße von maximal 10 nm aufweisen.

5. Verfahren nach einem der vorstehenden Ansprüche, **dadurch gekennzeichnet, daß**
die Lösung in Schritt a) eine klare Lösung ist, und daß
die Lösung in Schritt b) eine klare Lösung ist.

6. Verfahren nach einem der vorstehenden Ansprüche, **dadurch gekennzeichnet, daß** die Basen Alkali- und/oder Erdalkalibasen sind.

7. Verfahren nach einem der vorstehenden Ansprüche, **dadurch gekennzeichnet, daß** d) die Mischung c) gereinigt wird.

8. Verfahren nach einem der vorstehenden Ansprüche, **dadurch gekennzeichnet, daß** die Mischung c) oder die gereinigte Mischung d) stabilisiert wird.

9. Verfahren nach Anspruch 8, **dadurch gekennzeichnet, daß** die Stabilisierung durch Zugabe mindestens eines Stabilisierungsmittels, wie eines grenzflächenaktiven Kopplungsmittels und/oder eines grenzflächenaktiven Mittels oder Polymeren, zu der Mischung c) oder zu der gereinigten Mischung d) erfolgt.

10. Verfahren nach Anspruch 9, **dadurch gekennzeichnet, daß** die Mittel Silankopplungsmittel wie Aminopropyltrimethoxysilan, Glycidyloxypropyltrimethoxysilan, Trimethylmethoxysilan oder organische Ester von Phosphon- oder Phosphorsäure wie Dimethylmethylphosphonat oder Dibutylphosphat sind.

11. Verfahren nach einem der Ansprüche 8 bis 10, **dadurch gekennzeichnet, daß** eine zusätzliche oder alternative Stabilisierung durch Zugabe mindestens eines Dispergiermittels zur gereinigten Mischung d) erfolgt.

12. Verfahren nach Anspruch 11, **dadurch gekennzeichnet, daß** das Dispergiermittel ein nicht-ionisches, kationisches oder anionisches grenzflächenaktives Mittel in monomerer, oligomerer oder polymerer Form ist.

13. Verfahren nach einem der vorstehenden Ansprüche, **dadurch gekennzeichnet, daß** die Zeolith-Teilchen eine durchschnittliche Teilchengröße von weniger als 500 nm aufweisen.

14. Verfahren nach einem der vorstehenden Ansprüche, **dadurch gekennzeichnet, daß** die Zeolith-Teilchen eine Teichengrößenverteilung von maximal ± 30% aufweisen.

15. Verfahren nach einem der vorstehenden Ansprüche, **dadurch gekennzeichnet, daß** die Zeolith-Teilchen oder deren Aggregate Außenoberflächen von mehr als 50 m²/g aufweisen.

16. Verfahren nach einem der vorstehenden Ansprüche, **dadurch gekennzeichnet, daß** die Silikat-Quelle aus alkalischen und/oder erdalkalischen Silikaten, Silicasols, Aerosilen oder organischen Silicium-Komplexen wie Siliciumalkoxiden ausgewählt wird.

17. Verfahren nach Anspruch 16, **dadurch gekennzeichnet, daß** das Silicasol eine durchschnittliche Teilchengröße von maximal 100 nm aufweist.

18. Verfahren nach einem der vorstehenden Ansprüche, **dadurch gekennzeichnet, daß** die Aluminat-Quelle ausgewählt wird aus Alkalialuminaten, Aluminiumalkoxiden oder amorphen Aluminiumhydroxiden.

19. Verfahren nach einem der vorstehenden Ansprüche, **dadurch gekennzeichnet, daß** die Basen in einer Menge zugegeben werden, daß die Silikat-und/oder Germanat Quelle bzw. die Aluminat- und/oder Gallat-Quelle vollständig gelöst wird.

20. Verfahren nach einem der vorstehenden Ansprüche, **dadurch gekennzeichnet, daß** in den Schritten a), b) und c) heftig gemischt wird.

21. Verfahren nach einem der vorstehenden Ansprüche, **dadurch gekennzeichnet, daß** Schritt c) bei einer Temperatur im Bereich von 10 bis 60 °C durchgeführt wird.

22. Verfahren nach einem der vorstehenden Ansprüche, **dadurch gekennzeichnet, daß** in Schritt a) und/oder b) zusätzlich Quellen von Gallium-, Germanium-, Phosphor-, Bor-, Titan-, Eisen-, Chrom-, Beryllium-, Vanadium- oder anderen Metallionen zugesetzt werden.

23. Verfahren nach Anspruch 22, **dadurch gekennzeichnet, daß** die Quellen Oxide der Metalle sind.

24. Verfahren nach einem der vorstehenden Ansprüche, **dadurch gekennzeichnet, daß** Schritte a) und b) bei einem pH-Wert von mindestens 12 durchgeführt werden.

25. Verfahren nach einem der vorstehenden Ansprüche, **dadurch gekennzeichnet, daß** Schritte a) und b) bei einem pH-Wert von mindestens 13 oder mindestens 14 durchgeführt werden.

26. Nanoskalige Zeolith-Teilchen mit einer engen Teilchengrößenverteilung von ± 30%, erhältlich nach einem Verfahren nach einem der vorstehenden Ansprüche, wobei die nanoskaligen Zeolith-Teilchen eine mittlere Teilchengröße von ≤ 500 nm und eine Außenoberfläche von ≥ 50 m²/g aufweisen.

27. Kolloidale Suspensionen, die nanoskalige Zeolith-Teilchen nach Anspruch 26 in einem Suspensionsmittel enthalten.

28. Verwendung der nanoskaligen Zeolith-Teilchen und/oder deren kolloidaler Suspensionen nach einem der Ansprüche 26 oder 27 als Ionenaustauscher, Molekularsiebe, Katalysatorträger, Detergentien oder Saatkristalle bei der ZeolithSynthese.

29. Verwendung der nanoskaligen Zeolithteilchen und/oder deren kolloidaler Suspensionen nach einem der Ansprüche 26 oder 27 in porösen Membranen.

30. Verwendung der nanoskaligen Zeolithteilchen und/oder deren kolloidaler Suspensionen nach einem der Ansprüche 26 oder 27 als Pigmente oder Pigmentträger.

31. Verwendung der nanoskaligen Zeolithteilchen und/oder deren kolloidaler Suspensionen nach einem der Ansprüche 26 oder 27 als Vorstufen für keramische Materialien.

## Claims

1. Method for the preparation of zeolite particles having an average particle size of less than 1000 nm, wherein
a) a solution of a silicate and/or germanate source and a base is prepared,
b) a solution of an aluminate and/or gallate source and a base is prepared, and
c) the solutions a) and b) are brought together and reacted,
**characterised in that**
the silicate and/or germanate source in step a) and the aluminate and/or gallate source in step b) are readily soluble in the bases;
and
the pH value of the solution in step a) is at least 11;
and
the pH value of the solution in step b) is at least 11.

2. Method according to claim 1, **characterised in that**
no alkylammonium ions or other organic structure-directing agents are used.

3. Method according to any one of the previous claims, **characterised in that**
in step a) the molar ratio of base to silicate and/or germanate source is at least 2:1; and
in step b) the molar ratio of base to aluminate and/or gallate source is at least 2:1.

4. Method according to any one of the previous claims, **characterised in that**
the silicate and/or germanate particles in the solutions in step a) have a mean particle size of max. 10 nm; and
the aluminate and/or gallate particles in the solutions in step b) have a mean particle size of max. 10 nm.

5. Method according to any one of the previous claims, **characterised in that**
the solution in step a) is a clear solution; and
the solution in step b) is a clear solution.

6. Method according to any one of the previous claims, **characterised in that** the bases are alkali and/or alkaline earth bases.

7. Method according to any one of the previous claims, **characterised in that** d) the mixture c) is purified.

8. Method according to any one of the previous claims, **characterised in that** the mixture c) or the purified mixture d) is stabilised.

9. Method according to claim 8, **characterised in that** the stabilisation is carried out by adding at least one stabilising agent, such as a surface-active coupling agent and/or a surface-active agent or polymers, to the mixture c) or to the purified mixture d).

10. Method according to claim 9, **characterised in that** the agents are silane coupling agents such as aminopropyltrimethoxysilane, glycidyloxypropyltrimethoxysilane, trimethylmethoxysilane or organic esters of phosphonic or phosphoric acid such as dimethyl methyl phosphonate or dibutyl phosphate.

11. Method according to any one of claims 8 to 10, **characterised in that** an additional or alternative stabilisation is carried out by adding at least one dispersant to the purified mixture d).

12. Method according to claim 11, **characterised in that** the dispersant is a non-ionic, cationic or anionic surface-active agent in monomeric, oligomeric or polymeric form.

13. Method according to any one of the previous claims, **characterised in that** the zeolite particles have an average particle size of less than 500 nm.

14. Method according to any one of the previous claims, **characterised in that** the zeolite particles have a particle size distribution of max. ± 30 %.

15. Method according to any one of the previous claims, **characterised in that** the zeolite particles or aggregates thereof have external surface areas of more than 50 m²/g.

16. Method according to any one of the previous claims, **characterised in that** the silicate source is selected from alkali and/or alkaline earth silicates, silica sols, Aerosils and organic silica complexes such as silicon alkoxides.

17. Method according to claim 16, **characterised in that** the silica sol has an average particle size of max. 100 nm.

18. Method according to any one of the previous claims, **characterised in that** the aluminate source is selected from alkali aluminates, aluminium alkoxides and amorphous aluminium hydroxides.

19. Method according to any one of the previous claims, **characterised in that** the bases are added in such amounts that the silicate and/or germanate source and the aluminate and/or gallate source are completely dissolved.

20. Method according to any one of the previous claims, **characterised in that** vigorous mixing is carried out in steps a), b) and c).

21. Method according to any one of the previous claims, **characterised in that** step c) is carried out at a temperature in the range from 10 to 60°C.

22. Method according to any one of the previous claims, **characterised in that**, in steps a) and/or b), sources of gallium, germanium, phosphorus, boron, titanium, iron, chromium, beryllium, vanadium or other metal ions are additionally added.

23. Method according to claim 22, **characterised in that** the sources are oxides of the metals.

24. Method according to any one of the previous claims, **characterised in that** steps a) and b) are carried out at a pH value of at least 12.

25. Method according to any one of the previous claims, **characterised in that** steps a) and b) are carried out at a pH value of at least 13 or at least 14.

26. Nanoscale zeolite particles having a narrow particle size distribution of ± 30% obtainable by a method according to any one of the previous claims, wherein said nanoscale zeolite particles have an average particle size of less than 500 nm and an external surface area of more than 50 m²/g.

27. Colloidal suspensions which comprise nanoscale zeolite particles according to claim 26 in a suspending agent.

28. Use of the nanoscale zeolite particles and/or colloidal suspensions thereof according to either claim 26 or 27 as ion-exchangers, molecular sieves, catalyst supports, detergents or seed crystals in zeolite synthesis.

29. Use of the nanoscale zeolite particles and/or colloidal suspensions thereof according to either claim 26 or 27 in porous membranes.

30. Use of the nanoscale zeolite particles and/or colloidal suspensions thereof according to either claim 26 or 27 as pigments or pigment supports.

31. Use of the nanoscale zeolite particles and/or colloidal suspensions thereof according to either claim 26 or 27 as precursors for ceramic materials.

## Revendications

1. Procédé de préparation de particules de zéolite, avec une taille moyenne des particules inférieure à 1000 nm, où
a) on prépare une solution d'une source de silicate et/ou de germanate et d'une base,
b) on prépare une solution d'une source d'aluminate et/ou de gallate et d'une base, et
c) on réunit et fait réagir les solutions a) et b),
**caractérisé en ce que** la source de silicate et/ou de germanate de l'étape a) et la source d'aluminate et/ou de gallate de l'étape b) sont facilement solubles dans les bases, et **en ce que** le pH de la solution de l'étape a) s'élève à au moins 11, et **en ce que** le pH de la solution de l'étape b) s'élève à au moins 11.

2. Procédé selon la revendication 1, **caractérisé en ce que** l'on ne met en oeuvre aucun ion alkylammonium ou d'autres agents organiques dirigeant la structure.

3. Procédé selon l'une des revendications précédentes, **caractérisé en ce que** dans l'étape a), le rapport molaire de la base à la source de silicate et/ou de germanate s'élève à au moins 2:1, et **en ce que** dans l'étape b), le rapport molaire de la base à la source d'aluminate et/ou de gallate s'élève à au moins 2:1.

4. Procédé selon l'une des revendications précédentes, **caractérisé en ce que** les particules de silicate et/ou de germanate présentent, dans les solutions dans l'étape a), une taille moyenne des particules de au maximum 10 nm, et **en ce que** les particules d'aluminate et/ou de gallate présentent, dans les solutions dans l'étape b), une taille moyenne des particules de au maximum 10 nm.

5. Procédé selon l'une des revendications précédentes, **caractérisé en ce que** la solution dans l'étape a) est une solution limpide, et **en ce que** la solution dans l'étape b) est une solution limpide.

6. Procédé selon l'une des revendications précédentes, **caractérisé en ce que** les bases sont des bases d'alcalin et/ou d'alcalino-terreux.

7. Procédé selon l'une des revendications précédentes, **caractérisé en ce que** d) le mélange c) est purifié.

8. Procédé selon l'une des revendications précédentes, **caractérisé en ce que** le mélange c) ou le mélange d) purifié est stabilisé.

9. Procédé selon la revendication 8, **caractérisé en ce que** la stabilisation est réalisée par addition d'au moins un agent de stabilisation, comme un agent de couplage tensioactif et/ou un agent ou polymère tensioactif, au mélange c) ou au mélange d) purifié.

10. Procédé selon la revendication 9, **caractérisé en ce que** les agents sont des agents de couplage silane comme l'aminopropyltriméthoxysilane, le glycidyloxypropyltriméthoxysilane, le triméthylméthoxysilane ou des esters organiques d'acide phosphonique ou phosphorique comme le méthylphosphonate de diméthyle ou le phosphate de dibutyle.

11. Procédé selon l'une des revendications 8 à 10, **caractérisé en ce qu'**une stabilisation supplémentaire ou alternative est réalisée par addition d'au moins un agent de dispersion au mélange d) purifié.

12. Procédé selon la revendication 11, **caractérisé en ce que** l'agent de dispersion est un agent tensioactif non ionique, cationique ou anionique, sous forme de monomère, oligomère ou dimère.

13. Procédé selon l'une des revendications précédentes, **caractérisé en ce que** les particules de zéolite présentent une taille moyenne des particules inférieure à 500 nm.

14. Procédé selon l'une des revendications précédentes, **caractérisé en ce que** les particules de zéolite présentent une distribution de la taille moyenne des particules de maximum ± 30%.

15. Procédé selon l'une des revendications précédentes, **caractérisé en ce que** les particules de zéolite ou leurs agrégats présentent une surface spécifique de plus de 50 m²/g.

16. Procédé selon l'une des revendications précédentes, **caractérisé en ce que** la source de silicate est choisie parmi les silicates alcalins et/ou alcalino-terreux, les sols de silice, les aérosils ou les complexes organiques du silicium comme des alcoxydes de silicium.

17. Procédé selon la revendication 16, **caractérisé en ce que** le sol de silice présente une taille moyenne des particules de maximum 100 nm.

18. Procédé selon l'une des revendications précédentes, **caractérisé en ce que** la source d'aluminate est choisie parmi les aluminates alcalins, les alcoxydes d'aluminium ou les hydroxydes d'aluminium amorphes.

19. Procédé selon l'une des revendications précédentes, **caractérisé en ce que** les bases sont ajoutées en une quantité telle que la source de silicate et/ou de germanate et respectivement, la source d'aluminate et/ou de gallate est complètement dissoute.

20. Procédé selon l'une des revendications précédentes, **caractérisé en ce que** dans les étapes a), b) et c), on mélange vivement.

21. Procédé selon l'une des revendications précédentes, **caractérisé en ce que** l'étape c) est réalisée à une température située dans l'intervalle allant de 10 à 60°C.

22. Procédé selon l'une des revendications précédentes, **caractérisé en ce que** dans l'étape a) et/ou b), on ajoute en outre, des sources d'ions gallium, germanium, phosphore, bore, titane, fer, chrome, béryllium, vanadium ou d'autres métaux.

23. Procédé selon la revendication 22, **caractérisé en ce que** les sources sont des oxydes métalliques.

24. Procédé selon l'une des revendications précédentes, **caractérisé en ce que** les étapes a) et b) sont réalisées à un pH d'au moins 12.

25. Procédé selon l'une des revendications précédentes, **caractérisé en ce que** lesétapes a) et b) sont réalisées à un pH d'au moins 13 ou d'au moins 14.

26. Particules de zéolite nanométriques avec une distribution étroite de la taille des particules de ± 30%, pouvant être obtenues selon un procédé selon l'une des revendications précédentes, où les particules de zéolite nanométriques présentent une taille moyenne des particules ≤ 500 nm et une surface spécifique ≥ 50 m²/g.

27. Suspensions colloïdales, qui contiennent les particules de zéolite nanométriques selon la revendication 26 dans un agent de mise en suspension.

28. Utilisation des particules de zéolite nanométriques et/ou de leurs suspensions colloïdales selon l'une des revendications 26 ou 27, comme échangeur d'ions, tamis moléculaire, support de catalyseur, détergent ou cristaux d'ensemencement lors de la synthèse de zéolites.

29. Utilisation des particules de zéolite nanométriques et/ou de leurs suspensions colloïdales selon l'une des revendications 26 ou 27, dans des membranes poreuses.

30. Utilisation des particules de zéolite nanométriques et/ou de leurs suspensions colloïdales selon l'une des revendications 26 ou 27, comme pigment ou support de pigment.

31. Utilisation des particules de zéolite nanométriques et/ou de leurs suspensions colloïdales selon l'une des revendications 26 ou 27, comme précurseur de matériaux céramiques.
